# EUROPÄISCHE PATENTSCHRIFT

(11) **EP 3 448 708 B1**
(45) Veröffentlichungstag und Bekanntmachung des Hinweises auf die Patenterteilung: **27.05.2020**
(21) Anmeldenummer: 17717119.6
(22) Anmeldetag: 06.04.2017
(51) Int. Cl.: B60K 15/077, B60K 15/03, B29C 49/20, B29L 31/00, B29K 101/12

(54) **VERFAHREN ZUM HERSTELLEN EINES FLÜSSIGKEITSBEHÄLTERS, FLÜSSIGKEITSBEHÄLTER FÜR EIN KRAFTFAHRZEUG UND STRUKTUR ZUR VERRINGERUNG VON SCHWAPPGERÄUSCHEN**
METHOD FOR MANUFACTURING A LIQUID CONTAINER, LIQUID CONTAINER FOR A MOTOR VEHICLE AND STRUCTURE FOR REDUCING SLOSH NOISES
PROCÉDÉ DE FABRICATION D'UN CONTENEUR DE LIQUIDE, CONTENEUR DE LIQUIDE POUR UN VÉHICULE AUTOMOBILE ET STRUCTURE POUR LA RÉDUCTION DES BRUITS DE BALLOTTEMENT

(30) Priorität: 29.04.2016 DE 102016207476
(43) Veröffentlichungstag der Anmeldung: 06.03.2019
(73) Patentinhaber: Kautex Textron GmbH & Co. KG, 53229 Bonn (DE)
(72) Erfinder: TREUDT, Volker, 51570 Windeck (DE); SCHWENK, Christoph, 56743 Mendig (DE)
(74) Vertreter: Richly & Ritschel Patentanwälte PartG mbB
(86) Internationale Anmeldenummer: PCT/EP2017/058298
(87) Internationale Veröffentlichungsnummer: WO 2017/186471

(56) Entgegenhaltungen:
- EP-A1- 0 413 609
- DE-A1-102014 221 823
- FR-A1- 2 972 685
- JP-A- 2006 171 504

## Beschreibung

Die Erfindung betrifft ein Verfahren zum Herstellen eines Flüssigkeitsbehälters für ein Kraftfahrzeug, einen Flüssigkeitsbehälter für ein Kraftfahrzeug sowie eine Struktur zur Verringerung von Schwappgeräuschen, die dazu vorgesehen ist, in einem Flüssigkeitsbehälter für ein Kraftfahrzeug angeordnet zu werden.

In modernen Kraftfahrzeugen werden eine Vielzahl verschiedener Flüssigkeiten bevorratet, wie zum Beispiel Kraftstoff zum Antrieb des Motors, Harnstofflösung zur Abgasnachbehandlung oder Reinigungslösung zur Reinigung von Front- und Heckscheibe oder der Verglasung der Scheinwerfer. Diese Flüssigkeiten werden in entsprechenden Tanks oder Behältern in dem Kraftfahrzeug mitgeführt.

Aufgrund der Fahrzeugbewegung schlagen die Flüssigkeiten in Wellenbewegungen an die Innenwandung des jeweiligen Behälters und führen so zu Geräuschanregungen in dem Fahrzeug, die auch als "Schwappgeräusche" bezeichnet werden. Diese Schwappgeräusche werden in aktuellen Antriebssystemen nicht mehr vom Motorgeräusch maskiert und können von den Fahrzeuginsassen als störend empfunden werden. So ist die Geräuschemission von Hybrid- oder Elektroantrieben deutlich geringer als die eines klassischen, rein verbrennungsmotorischen Antriebs und reicht nicht mehr aus, um die Geräuschanregung durch die mitgeführten Flüssigkeiten zu überdecken. Aber auch in Fahrzeugen mit rein verbrennungsmotorischem Antrieb, die eine Start-/Stopp-Automatik aufweisen, sind die Flüssigkeitsbewegungen unmittelbar nach dem Anhalten des Fahrzeugs und dem Ausschalten des Motors in der Fahrgastzelle wahrnehmbar.

Zur Minderung der Flüssigkeitsbewegung ist es bekannt, Schwallwände im Inneren eines Tanks anzuordnen. Derartige Schwallwände müssen jedoch in komplexe Tankgeometrien integriert werden und dürfen zudem die Funktionalität und Zugänglichkeit etwaiger innerhalb eines Tanks angeordneter beweglicher Bauteile nicht beeinträchtigen. Die Möglichkeiten der Anordnung von Schwallwänden innerhalb eines Tanks sind daher stark eingeschränkt, so dass mithilfe von Schwallwänden kein ausreichender akustischer Schutz gewährleistet werden kann.

Weiter ist es bekannt, sogenannte "Igelmatten" an Tankinnenwänden zu befestigen. Diese bestehen aus einer Vielzahl von frei in das Tankinnere auskragenden Pins, die auf einer Matte angeordnet sind. Die einzelnen Pins dienen dazu, Wellenbewegungen zu stören. Die Wirkung solcher Igelmatten ist jedoch abhängig von der Durchströmungsrichtung. Durchströmt die Flüssigkeit die Anordnung der Pins quer zu deren Längserstreckung, kann die Wellenbewegung gedämpft werden. Treffen die Wellenfronten allerdings stirnseitig auf die Pins, findet lediglich eine geringe Beeinflussung der Flüssigkeitsbewegung statt. Zudem werden Igelmatten üblicherweise nur an wenigen Punkten an der Tankinnenwand befestigt, so dass die Matte ihrerseits gegen die Tankinnenwand schlagen und so zur Geräuschanregung beitragen kann. Um ein ganzes Tanksystem mithilfe von Igelmatten akustisch zu optimieren, ist zudem ein hoher Materialeinsatz erforderlich, der das Gewicht das Tanks insgesamt erheblich steigert.

Zur Minderung von Wellenbewegungen und der Dämpfung von Schwappgeräuschen wird in der DE 10 2012 009 944 A1 vorgeschlagen, Matten aus einem Gestrick, Gewirk oder Gewebe in einem Flüssigkeitsbehälter anzuordnen. Das Dämpfungsvermögen dieser Matten ist aufgrund der regelmäßigen Struktur der Gewirke, Gestricke oder Gewebe richtungsabhängig, so dass, abhängig von der Durchströmungsrichtung, eine mehr oder weniger gute Dämpfung der Flüssigkeitsbewegung und der daraus resultierenden Geräuschanregung stattfindet. Weiter können sich Fäden oder kleinere Abriebteile aus dem Gewirk, Gestrick oder Gewebe lösen, die die Funktionalität von Hebelgebern, Ventilen oder Pumpen, die in einem Flüssigkeitsbehälter oder Tank angeordnet sein können, beeinträchtigen.

Zudem ist nachteilig, dass gemäß DE 10 2012 009 944 A1 zur Anbindung der Matten innerhalb des Behälters zusätzliche Befestigungselemente an der Matte oder dem Behälter erforderlich sind. Mithilfe dieser Befestigungselemente werden die Matten nur an ihren Rändern mit dem Tank verbunden und können im Fahrzeugbetrieb an die Behälterwand anschlagen oder daran reiben und so ihrerseits Geräusche verursachen. Weiter werden die Matten nach der Fertigstellung des Tankgehäuses an der Tankinnenwand befestigt, so dass die Möglichkeiten der Anordnung der Matten eingeschränkt sind. Die Matten aus Gestrick, Gewirk oder Gewebe sind ferner nicht vollständig automatisiert herstellbar und daher teuer in der Produktion.

Weitere Verfahren zum Herstellen eines Flüssigkeitsbehälters für ein Kraftfahrzeug, zugehörige Flüssigkeitsbehälter und Strukturen zur Verringerung von Schwappgeräuschen sind aus der EP 0 413 609 A1 und der JP 2006 171504 A bekannt.

Vor diesem Hintergrund liegt der Erfindung die technische Problemstellung zugrunde, ein Herstellverfahren für einen Flüssigkeitsbehälter, einen Flüssigkeitsbehälter für ein Kraftfahrzeug und eine Struktur zur Verringerung von Schwappgeräuschen anzugeben, die die voranstehend beschriebenen Nachteile nicht oder zumindest in geringerem Maße aufweisen, und in kostengünstiger und einfacher Weise bereitgestellt werden können.

Die voranstehend beschriebene, technische Problemstellung wird durch ein Verfahren nach Anspruch 1, einen Flüssigkeitsbehälter nach Anspruch 11 sowie eine Struktur nach Anspruch 13 gelöst. Vorteilhafte Ausgestaltungen der Erfindung ergeben sich aus den abhängigen Ansprüchen und der nachstehenden Beschreibung.

Gemäß einem ersten Aspekt betrifft die Erfindung ein Verfahren zum Herstellen eines Flüssigkeitsbehälters für ein Kraftfahrzeug mit den Merkmalen des Anspruchs 1.

"Regellose Anordnung" bzw. "regellos" bedeutet vorliegend, dass die Fäden der Struktur keiner vorgegebenen Ordnung folgend relativ zueinander angeordnet sind, wie es beispielsweise für Gewebe, Gestricke oder Gewirke charakteristisch wäre. Vielmehr bilden die Fäden der Struktur ein chaotisches Fadengewirr bzw. sind in einer zufälligen räumlichen Anordnung knäuelartig ineinander verwunden. Mit anderen Worten sind die Fäden nach Art einer zufälligen, räumlichen Drahtgitterstruktur miteinander vernetzt.

Die regellose Anordnung miteinander vernetzter Fäden hat den Vorteil, dass die Dämpfungseigenschaften der Struktur unabhängig von der Durchströmungsrichtung sind. Auf diese Weise kann eine zuverlässige Reduzierung der Schwappgeräusche erreicht werden.

Erfindungsgemäß sind eine Mehrzahl der Fäden der Struktur zumindest abschnittsweise stoffschlüssig mit wenigstens einem oder mehreren weiteren Fäden der Struktur derart verbunden, dass eine im Wesentlichen monolithische Struktur gebildet ist. "Im Wesentlichen monolithisch" bedeutet vorliegend, dass die Struktur keine lose entnehmbaren Fäden umfasst. Die Fäden der Struktur sind folglich form- und/oder stoffschlüssig fest in die Struktur integriert, so dass die Funktionalität von Ventilen oder Hebelgebern, die in dem Flüssigkeitsbehälter angeordnet sein können, nicht durch aus der Struktur herausgelöste Einzelfäden gestört wird.

Die Struktur und/oder die Wandung können aus einem oder mehreren Kunststoffen ein- oder mehrlagig bereitgestellt werden. Die Wandung kann beispielsweise eine oder mehrere Schichten aus HDPE (Englisch: High-Density-Polyethylen), LDPE (Englisch: Low-Density-Polyethylen) und EVOH (Ethylen-Vinylalkohol-Copolymer) aufweisen. Die Struktur kann im Wesentlichen aus einer Vielzahl einzelner Kunststofffäden aufgebaut sein, die aus PE (Polyethylen) oder PP (Polypropylen) hergestellt sein können. Auch die Kunststofffäden können mehrschichtig aufgebaut sein, wobei beispielsweise ein Kernfaden mit einem oder mehreren weiteren Kunststoffen ummantelt sein kann. Alternativ oder ergänzend können die Fäden hohl und damit schlauchartig ausgebildet sein, um eine hohe Steifigkeit der Struktur bei gleichzeitig geringem Gewicht und Materialaufwand zu erreichen.

Nach einer Weiterbildung des Verfahrens ist jeder Faden der bereitgestellten Struktur mit wenigstens einem oder mehreren weiteren Fäden der Struktur stoffschlüssig verbunden. Die Fäden bilden in diesem Fall eine monolithische Struktur, so dass keiner der Fäden zerstörungsfrei aus der Struktur herausgelöst werden kann.

Gemäß dem erfindungsgemäßen Verfahren ist vorgesehen, dass das Verbinden der Struktur mit der Wandung den folgenden Verfahrensschritt aufweist:
- Verschweißen und/oder Verkleben der Struktur mit der Wandung, so dass zwischen der Struktur und der Wandung eine stoffschlüssige Verbindung gebildet wird.

Vorzugsweise ist die Wandung während des Verbindens mit der Struktur in einem zumindest teilweise plastifizierten Zustand. So kann in einfacher und kostengünstiger Weise eine zuverlässige Anbindung der Struktur an die Wandung erfolgen.

Die stoffschlüssige Verbindung zwischen der Struktur und der Wandung kann durch ein Verschweißen einzelner Fäden der Struktur mit der Wandung realisiert werden. Folglich können das Material der Wandung und das Material der Struktur miteinander verschmelzen. Beispielsweise können die Struktur und die Wandung Kunststoffe aufweisen, die miteinander verschweißbar sind. Die Struktur und/oder die Wandung können mit einem Kunststoff beschichtet sein, der mit einem Kunststoff des jeweils anderen Bauteils verschweißbar ist. Beispielsweise können die Struktur und/oder die Wandung HDPE, LDPE, PA oder PP aufweisen. Alternativ oder ergänzend kann die Struktur mit der Wandung verklebt werden. Die Wandung kann während des Verbindens mit der Struktur in einem zumindest teilweise plastifizierten Zustand sein. Beispielsweise kann die Wandung aus einem vorhergehenden Formgebungsprozess, wie Spritzgießen, Blasformen oder Tiefziehen oder dergleichen, noch in einem erwärmten Zustand sein, der für die Anbindung der Struktur, insbesondere ein Verschweißen mit der Struktur, ausgenutzt werden kann. Das Verbinden zwischen der Wandung und der Struktur kann daher in der formgebenden Wärme der Wandung erfolgen. Alternativ oder ergänzend kann die Wandung durch einen zusätzlichen Energie- oder Wärmeeintrag für den Verbindungsschritt mit der Struktur erwärmt werden. Alternativ oder ergänzend kann die Struktur vor dem Verbinden erwärmt werden.

Um eine kostengünstige Verbindung der Struktur mit der Wandung ohne zusätzliche Verbindungs- oder Zwischenelemente anzugeben, kann das Verbinden der Struktur mit der Wandung den folgenden Verfahrensschritt aufweisen:
- Herstellen einer unlösbaren Verbindung zwischen der Struktur und der Wandung, so dass die Wandung und die Struktur einstückig gebildet sind. Demnach können die Struktur und die Wandung nach dem Verbinden eine nicht zerstörungsfrei trennbare Einheit bilden.

Nach einer weiteren Ausgestaltung des Verfahrens ist vorgesehen, dass das Verbinden der Struktur mit der Wandung den folgenden Verfahrensschritt aufweist:
- Anpressen der Struktur an die Wandung, so dass zwischen der Struktur und der Wandung eine formschlüssige Verbindung gebildet wird, wobei
- die Wandung während des Verbindens mit der Struktur insbesondere in einem zumindest teilweise plastifizierten Zustand ist.

Während des Anpressens der Struktur an die Wandung kann das Material der Wandung einzelne Fäden zumindest teilweise umfließen, so dass eine formschlüssige Verbindung zwischen der Struktur und der Wandung hergestellt wird. So können einzelne Fadenenden oder Fadenschlaufen der Struktur in das Material der Wandung eingreifen bzw. hineinragen und einer Relativbewegung der Struktur gegenüber der Wandung nach Art von Widerhaken entgegenwirken.

Die formschlüssige Verbindung kann durch eine stoffschlüssige Verbindung ergänzt werden. Demgemäß kann eine Mantelfläche eines Fadens der Struktur lokal aufgeschmolzen worden sein und stoffschlüssig in das Material der Wandung übergehen, während ein Kern des Fadens strukturell bestehen bleibt und in die Wandung hineinragt. Hierbei kann es sich um einen Faden aus einem Monowerkstoff handeln, der lediglich teilweise aufschmilzt, oder um einen zwei- oder mehrlagig aufgebauten Faden, dessen ein- oder mehrlagige Ummantelung aufgeschmolzen wird, während ein Kernmaterial bestehen bleibt. Mit anderen Worten kann die Struktur in das Material der Wandung eindringen oder eingedrückt werden und/oder lokal mit diesem verschweißen.

Die Wandung kann während des formschlüssigen Verbindens mit der Struktur in einem zumindest teilweise plastifizierten Zustand sein. Das Fügen kann, wie zuvor bereits ausgeführt, in der formgebenden Wärme der Wandung erfolgen, um die Wärme aus vorhergehenden Verfahrensschritten auszunutzen. Alternativ oder ergänzend kann die Wandung durch einen Energie- oder Wärmeeintrag für ein formschlüssiges Verbinden mit der Struktur vorbereitet werden. Alternativ oder ergänzend kann die Struktur vor dem Verbinden erwärmt werden.

Gemäß einer weiteren Ausgestaltung des Verfahrens ist vorgesehen, dass das Verbinden der Struktur mit der Wandung einen der folgenden Verfahrensschritte aufweist:
- Herstellen einer im Wesentlichen vollflächigen Verbindung zwischen der Struktur und der Wandung, so dass über einen Verbindungsbereich verteilt eine Vielzahl regellos angeordneter Verbindungsstellen zwischen der Struktur und der Wandung gebildet sind. Durch die vollflächige Verbindung kann verhindert werden, dass die Struktur während des Fahrzeugbetriebs an die Wandung schlägt oder daran reibt. Es findet daher keine zusätzliche Geräuschanregung durch die Struktur selbst statt; oder
- Herstellen separater oder lokaler Verbindungsbereiche zwischen der Wandung und der Struktur.

Die Struktur ist bevorzugt eine offene Gitterstruktur. Der Begriff "Vollflächige Verbindung" bedeutet in diesem Zusammenhang, dass in einem zwischen der Struktur und der Wandung aufgespannten Verbindungsbereich, der in seiner Längen- und Breitenabmessung im Wesentlichen einer Grund- oder Deckfläche der Struktur entsprechen kann, über den gesamten Verbindungsbereich verteilt eine Vielzahl lokaler, regellos angeordneter Verbindungspunkte zwischen den Fäden der Struktur und der Wandung gebildet sind. Aufgrund der regellosen Fadenanordnung können beim Verbinden von Wandung und Struktur eine Vielzahl regellos angeordneter Verbindungsstellen zwischen der Wandung und der Struktur hergestellt werden, insbesondere lokale Verschweißungen.

Alternativ zu einer vollflächigen Verbindung kann vorgesehen sein, separate oder lokale Verbindungsbereiche zwischen der Wandung und der Struktur auszubilden. Dies kann beispielsweise dann vorgesehen sein, wenn die Geometrie des Flüssigkeitsbehälters oder An- und Umbauteile die Anbindung der Struktur an die Wandung einschränken.

Um die Struktur an die Geometrie der Wandung anzupassen, kann die Struktur zur Anlage an der Wandung zumindest abschnittsweise deformiert werden. Die Formgebung der Struktur kann vor dem Einbringen der Struktur in den Innenraum erfolgen. So kann die Struktur separat und unabhängig von der Wandung zunächst geformt und dann mit der Wandung verbunden werden.

Die Struktur kann vor der Formgebung erwärmt und in dem erwärmten Zustand verformt werden, wobei die Struktur nach dem Abkühlen in der vorgesehenen Form verbleibt. Das Deformieren der Struktur kann beispielsweise durch Rollen oder Walzen erfolgen. Die Struktur kann in einem Werkzeug vorgeformt werden, so dass die Struktur Formelemente aufweist, die zu Formelementen, die in der fertigen Wandung vorgesehen sind, komplementär geformt sind. Die Struktur kann daher zu einer Form der Wandung komplementär geformt sein, um bündig an der Wandung anzuliegen.

Bevorzugt werden die stoffschlüssigen Verbindungen zwischen einzelnen Fäden der Struktur durch das Deformieren bzw. das plastische und/oder elastische Verformen der Struktur nicht beeinträchtigt. Insbesondere findet kein Abreißen oder Aufreißen lokaler Verbindungsstellen zwischen den Fäden statt. Das im Wesentlichen monolithische Fadengefüge bleibt daher bevorzugt vollständig intakt, und wird durch etwaige Formgebungs- oder Pressvorgänge nicht zerstört. Dies kann durch ein Erwärmen der Struktur vor der Deformation erreicht werden.

Die Anpassung der Struktur an die Wandung des Flüssigkeitsbehälters kann während des Verbindens mit der Wandung erfolgen. Ist die Wandung beispielsweise in einem Formwerkzeug aufgenommen, kann die Struktur mit Hilfe eines Aktuators an die Wandung angedrückt werden und sich dabei abschnittsweise der Innenkontur der Wandung folgend an die Wandung anlegen. Die Struktur kann auch in diesem Fall erwärmt werden, um die Formgebung zu begünstigen. Die Verformung der Struktur kann auch durch ein Schließen eines Werkzeugs erfolgen, während die Struktur innerhalb des Werkzeugs beispielsweise an einem Trag- oder Fügerahmen gehalten ist.

Alternativ oder ergänzend kann die Formgebung der Struktur durch eine Druckbeaufschlagung bewirkt werden. Hierzu kann die Struktur vor der Druckbeaufschlagung umhüllt werden, um ein Verformen der offenen Fadenstruktur zu ermöglichen. Das Umhüllen kann durch eine Folie erfolgen, die nach der Formgebung entfernt wird.

Das Bereitstellen der Wandung kann durch Blasformen erfolgen. Nach einer Weiterbildung des Verfahrens weist das Bereitstellen der Wandung die folgenden Verfahrensschritte auf:
- Extrudieren eines Vorformlings, der dazu vorgesehen ist, durch Blasformen zu einer Wandung des Flüssigkeitsbehälters geformt zu werden;
- Einbringen des Vorformlings in ein Blasformwerkzeug;
- Formen der Wandung des Flüssigkeitsbehälters durch Druckbeaufschlagung des Vorformlings innerhalb des Blasformwerkzeugs. Gemäß dieser Ausgestaltung weist das Verbinden der Struktur mit der Wandung den folgenden Verfahrensschritt auf:
- Einführen der Struktur in den Innenraum, wobei die Wandung während des Einführens der Struktur innerhalb des Blasformwerkzeugs angeordnet ist.

Das Verbinden der Struktur mit der Wandung kann daher in eine Vorrichtung und ein Verfahren zum Blasformen eingebunden werden. Die Struktur kann innerhalb des Blasformwerkzeugs in der formgebenden Wärme des Blasformvorgangs mit der Wandung verbunden werden.

Innerhalb des Blasformwerkzeugs können eine stoffschlüssige und/oder eine formschlüssige Verbindung zwischen der Wandung und der Struktur hergestellt werden. Das formschlüssige Verbinden kann sowohl das lokale Eindrücken der Struktur in die Wandung als auch die Formgebung der Struktur zur Anpassung an die Form der Wandung umfassen.

Das Verbinden der Struktur mit der Wandung kann einen der folgenden Verfahrensschritte aufweisen:
- Anordnen der Struktur an einem Aktuator, der zum Einführen der Struktur in den Innenraum und zum Anpressen der Struktur an die Wandung vorgesehen ist; und/oder
- Anordnen der Struktur (2) an einem Fügerahmen, der insbesondere dazu vorgesehen ist, zwischen Halbschalen der Wandung (14) des Flüssigkeitsbehälters (28) angeordnet zu werden.

Mithilfe des Aktuators kann die Struktur in dem Innenraum positioniert werden. Ferner kann der Aktuator zum Andrücken der Struktur an die Wandung und zur Formgebung der Struktur dienen. Der Aktuator kann gleichzeitig ein Handhabungs- und Formgebungswerkzeug sein und daher eine effiziente Verfahrensführung begünstigen.

Die Struktur kann an einem Fügerahmen gehalten sein, der sowohl starre Halteelemente als auch Aktuatoren aufweisen kann. Der Fügerahmen kann zwischen zwei zum Ausformen der Wandung vorgesehenen Werkzeughälften angeordnet sein, wobei die Werkzeughälften in Richtung des Fügerahmens verfahrbar sein können. Beispielsweise kann der Fügerahmen zwischen zwei in einer Offenstellung angeordneten Werkzeughälften positioniert werden. Durch ein Verfahren der Werkzeughälften in eine Schließstellung kann die an dem Fügerahmen gehaltene Struktur mit der Wandung verbunden werden.

In dem Blasformprozess kann der Vorformling als umfangsseitig geschlossener Schlauch extrudiert werden. Die Struktur kann mithilfe des Aktuators in eine stirnseitige Öffnung des Vorformlings eingeführt werden. Während des Verbindungsschritts können die Struktur und die Wandung zwischen dem Werkzeug zum Blasformen und dem Aktuator aneinandergedrückt bzw. verpresst werden.

Alternativ kann der Vorformling als zunächst umfangsseitig geschlossener Schlauch extrudiert werden, der unmittelbar nach der Extrusion längs in zwei Hälften aufgespalten bzw. aufgetrennt wird. Die beiden Hälften des Vorformlings können separat und unabhängig voneinander in das Werkzeug zum Blasformen eingebracht werden. Die Struktur kann mithilfe des Aktuators zwischen den Hälften des Vorformlings positioniert, in Richtung des Blasformwerkzeugs bewegt und mit der Wandung gefügt und/oder verschweißt werden.

In beiden voranstehend beschriebenen Varianten legt sich der Vorformling bzw. eine jeweilige Hälfte des Vorformlings durch eine Druckbeaufschlagung an eine Innenkontur der Blasform an, so dass die vorgesehene Wandungsform des herzustellenden Flüssigkeitsbehälters gebildet wird. Sofern der Vorformling längsseitig aufgetrennt worden ist, werden die beiden Wandungshälften umfangsseitig verbunden, nachdem die Struktur und gegebenenfalls zusätzliche Komponenten im Innenraum des herzustellenden Flüssigkeitsbehälters angeordnet worden sind.

Das Werkzeug zum Blasformen ist bevorzugt wenigstens zweigeteilt und kann zum Einbringen des Vorformlings und zur Entnahme des Flüssigkeitsbehälters geöffnet und geschlossen werden. Die Innendruckbeaufschlagung kann mithilfe eines Blas- und/oder Kalibrierdorns erfolgen.

Das Bereitstellen der Wandung kann einen der folgenden Verfahrensschritte aufweisen:
- Spritzgießen der Wandung, wobei die Wandung insbesondere Befestigungsmittel zur lösbaren Befestigung der Struktur an der Wandung aufweist; oder
- Extrudieren von wenigstens zwei mattenartigen Vorformlingen, die dazu vorgesehen sind, zu der Wandung verbunden zu werden.

Die Wandung kann aus zwei Halbschalen gebildet sein, die durch Spritzgießen hergestellt werden.

An der Wandung können Befestigungsmittel zur lösbaren Befestigung der Struktur an der Wandung vorgesehen sein. Beispielsweise können an der Wandung in den Innenraum auskragende Haltedorne oder Formelemente gebildet sein, die zur Aufnahme von Schrauben, Muttern, Nutensteinen oder sogenannter Speednuts vorgesehen sind und zum Befestigen der Struktur an der Wandung dienen. Die Befestigungsmittel können im Spritzgussverfahren einstückig mit der Wandung ausgeformt werden. Beispielsweise kann die Struktur mithilfe einer Clip- oder Schnappverbindungen formschlüssig an der Wandung gehalten sein.

Die Wandung kann durch Extrudieren von wenigstens zwei mattenartigen Vorformlingen, die dazu vorgesehen sind, zu der Wandung verbunden zu werden, bereitgestellt werden. Dieser Vorgang ist in der DE 10 2014 221 823 A1 beschrieben.

Nach einer weiteren Ausgestaltung des Verfahrens weist das Bereitstellen der Struktur wenigstens einen der folgenden Verfahrensschritte aufweist:
- Bereitstellen eines mattenartigen Halbzeugs;
- Konfektionieren der Struktur aus dem mattenartigen Halbzeug entlang wenigstens einer Trennebene;
- Nachbearbeiten der Struktur im Bereich der Trennebene und/oder im Bereich von Deckflächen, insbesondere durch Heißverstemmen, Walzen, Verdichten oder Verschweißen.

Das Material der Struktur kann als Mattenware bereitgestellt werden, wobei die Struktur einen Zuschnitt aus einer solchen Mattenware darstellen kann. Die Struktur kann im Bereich der Trennebene nachbearbeitet werden, um aufgetrennte Fadenschlaufen oder abgetrennte Fadenenden, die durch den Trennvorgang gegebenenfalls lose in der Struktur hängen, zu entfernen. Dies kann durch Vibration des Bauteils, Ausblasen mittels Druckluft, Spülen mittels einer Flüssigkeit oder mechanisches Bürsten erfolgen.

Ferner können die Trennflächen oder Deckflächen der Struktur alternativ oder ergänzend durch Heißverstemmen, Walzen, Verdichten, oder Verschweißen nachbearbeitet werden. "Deckflächen" sind in diesem Zusammenhang gedachte Flächen, die die geometrischen Abmaße der offenen Fadenstruktur begrenzen. So kann die Struktur beispielsweise quaderförmig aus der Mattenware herausgearbeitet sein. Durch die Nachbearbeitung kann die Struktur im Bereich der Deckflächen und/oder der Trennebene(n) lokal verdichtet werden, um die Formbeständigkeit der Struktur zu erhöhen. Beispielsweise kann durch ein Verdichten der Deckflächen erreicht werden, dass ein geringerer Anteil der heißen Blasluft während eines Blasformvorgangs in das Innere der Struktur eindringt, die möglicherweise ein Auflösen stoffschlüssiger Fadenverbindungen bewirken könnte. Das Konfektionieren und Heißverstemmen der Struktur können in einem kombinierten Prozessschritt erfolgen.

Die Struktur kann durch ungerichtetes, regelloses aufeinanderlegen erwärmter Kunststofffäden gebildet werden. Die Struktur kann alternativ durch ein Vernetzen extrudierter Fäden erzeugt werden, wie nachfolgend dargelegt.

Ein Kunststoffgranulat wird zunächst zu einer extrudierbaren, homogenen Kunststoffmasse aufgeschmolzen. Die Kunststoffmasse wird durch eine Matrize gepresst, die ein Raster bzw. eine Matrix zueinander beabstandeter Öffnungen aufweist. Die Öffnungen können beispielsweise kreisförmig sein.

Durch das Passieren der Matrize wird die Kunststoffmasse in eine Vielzahl zueinander beabstandeter Einzelfäden separiert die, bei bevorzugt vertikaler Extrusionsrichtung, im Wesentlichen parallel zueinander verlaufen. Die so gebildete, kontinuierlich extrudierte Fadenmatrix kann zu der erfindungsgemäßen Struktur geformt werden, indem einzelne Fäden quer zur Extrusionsrichtung ausgelenkt werden, und mit benachbarten Fäden verkleben bzw. verschweißen.

Dabei kann es bereits ausreichen, einzelne Fäden der kontinuierlich als parallele Einzelfäden extrudierten Fadenmatrix auszulenken, um ein Verwinden bzw. Verknäulen der Fadenmatrix über den gesamten Matrixquerschnitt auszulösen. Sobald sich die noch plastischen Kunststofffäden im Bereich ihrer äußeren Mantelflächen berühren, bildet sich in diesem Kontaktbereich eine stoffschlüssige Verbindung zwischen den jeweiligen Fäden aus. Die so extrudierte, regellose Struktur kann unmittelbar nach dem Vernetzen der Fäden in einem Wasserbad oder dergleichen abgekühlt werden, um die Gitterstruktur und die lokalen stoffschlüssigen Fadenverbindungen in ihrer Form zu fixieren.

Um der Struktur eine platten- oder mattenartige Form zu geben, kann die Struktur zwischen Walzen oder Platten geformt werden. Ein Walzspalt kann sowohl zur Formgebung als auch zum Bewirken eines Querversatzes der Fäden dienen, um die regellose Struktur aus der parallel extrudierten Fadenmatrix zu formen. Dazu muss die Spaltweite des Walzspalts geringer sein als die Breite der parallel extrudierten Fadenmatrix. Alternativ oder ergänzend können die Fäden in eine Form extrudiert werden, die der Form der Tankwandung entspricht oder angenähert ist, um das Verbinden der Struktur mit der Wandung zu erleichtern.

Gemäß einem weiteren Aspekt betrifft die Erfindung einen Flüssigkeitsbehälter für ein Kraftfahrzeug mit den Merkmalen des Anspruchs 11.

Die regellose Anordnung miteinander vernetzter Fäden hat den Vorteil, dass eine verbesserte Dämpfung von Schwappgeräuschen erreicht werden kann. Insbesondere ist die Dämpfung der Schwappgeräusche durch die Struktur unabhängig von der Durchströmungsrichtung der Struktur.

Der Flüssigkeitsbehälter ist mit dem voranstehend beschriebenen Verfahren herstellbar. Der Flüssigkeitsbehälter kann ein Kraftstofftank für ein Kraftfahrzeug sein.

Die Struktur ist mit der Wandung verschweißt und/oder verklebt und sie kann zusätzlich mit der Wandung formschlüssig verbunden sein, wobei insbesondere eine Vielzahl regellos angeordneter Verbindungsstellen zwischen der Struktur und der Wandung gebildet sein können. Insbesondere können eine Vielzahl lokaler Verbindungsstellen, wie Verschweißungen und/oder Verklebungen, zwischen der Struktur und der Wandung gebildet sein. Es kann eine vollflächige Verbindung zwischen der Struktur und der Wandung gebildet sein. Auf diese Weise kann ein Schlagen der Struktur gegen die Wandung oder Reiben der Struktur an der Wandung aufgrund von Flüssigkeits- oder Fahrzeugbewegungen verhindert werden. Die Struktur und die Wandung können einstückig ausgebildet sein.

Alternativ oder ergänzend können mechanisch wirkende Halte- oder Verbindungselemente vorgesehen sein, um die Struktur mit der Wandung zu verbinden. Insbesondere kann es sich dabei um lösbare Befestigungselemente handeln.

Gemäß einer weiteren Ausgestaltung kann die Struktur mit der Wandung formschlüssig verbunden sein. Ein solcher Formschluss kann einerseits dadurch hergestellt werden, dass die Außenkontur der Struktur an die dem Innenraum zugewandte Kontur bzw. Form der Wandung angepasst ist, sei es durch eine Formgebung vor dem Verbindungsschritt mit der Wandung, oder eine Formgebung, die beispielsweise während eines Anpressens der Struktur an die Wandung erfolgt ist. Andererseits kann ein Formschluss alternativ oder ergänzend dadurch erzeugt sein, dass einzelne oder eine Vielzahl von Fäden mit ihren Fadenenden oder Fadenschlaufen zumindest teilweise von dem Material der Wandung umschlossen sind.

Gemäß einer Ausgestaltung der Erfindung kann eine stoffschlüssige und/oder formschlüssige Verbindung zwischen der Struktur und der Wandung gebildet sein, wobei zusätzlich Schraubenverbindungen zum Halten, Verspannen oder Formen der Struktur dienen können.

Die Struktur kann in einem der Wandung zugewandten Bereich verdichtet sein, sodass in dem der Wandung zugewandten Bereich eine höhere Fadendichte vorliegt, als in einem von der Wandung beabstandeten Bereich. Insbesondere kann die Struktur zweiseitig durch Walzen oder Pressen verdichtet worden sein. Das Verdichten der Struktur hat den Vorteil, dass der verdichtete Bereich eine erhöhte Steifigkeit und Formbeständigkeit aufweist, sodass das Risiko der Auflösung oder Zerstörung einzelner Fadenverbindungen beim Verbinden der Wandung mit der Struktur reduziert wird.

Gemäß einem letzten Aspekt betrifft die Erfindung eine Struktur zur Verringerung von Schwappgeräuschen mit den Merkmalen des Anspruchs 13.

Die Struktur ist dazu vorgesehen, in dem erfindungsgemäßen Flüssigkeitsbehälter und/oder dem erfindungsgemäßen Verfahren eingesetzt zu werden.

Es können mehr als 90%, bevorzugt mehr als 95%, weiter bevorzugt mehr als 98% der Fäden der Struktur mit einem oder mehreren weiteren Fäden der Struktur stoffschlüssig verbunden sein.

Die einzelnen Fäden der Struktur, die aus Kunststoff gebildet sein können, sind bevorzugt in sich steif und nicht biegeschlaff. Die Einbindung eines Fadens in die Struktur kann alternativ oder ergänzend zu einer stoffschlüssigen Verbindung dadurch erfolgen, dass der Faden in mehreren Bereichen derart mit weiteren Fäden der Struktur verwunden ist, dass er aufgrund des Formschlusses der Struktur nicht entnommen werden kann.

Nach einer Weiterbildung der Struktur ist jeder Faden der Struktur mit wenigstens einem weiteren oder mit mehreren Fäden der Struktur stoffschlüssig verbunden.

Bevorzugt weist die Struktur keine Saugwirkung für die in dem Behälter bevorratete Flüssigkeit auf.

Nach einer Weiterbildung sind innerhalb der Struktur eine Vielzahl regellos angeordneter Verbindungsstellen vorgesehen, insbesondere lokale Verschweißungen sich kreuzender Fäden.

Durch die im Wesentlichen monolithische Ausgestaltung der Struktur kann die Struktur derart steif ausgebildet sein, dass eine unmittelbare Verbindung zwischen den Fäden der Struktur und der Wandung gebildet werden kann, ohne dass zusätzliche Zwischenelemente erforderlich sind. Bevorzugt ist die Struktur in ihrer zum Verbinden mit der Wandung vorgesehenen Form somit nicht nach Art eines Seils oder einer Gewebematte biegeschlaff. Vielmehr kann die Struktur als ein aus einer Mattenware konfektionierter, beispielsweise quaderförmiger Zuschnitt, der zur Montage in dem Flüssigkeitsbehälter vorgesehen ist, nach Art eines Kragbalkens endseitig gehalten werden, ohne sich maßgeblich unter seinem Eigengewicht zu verformen. Die Struktur kann daher einfach und kostengünstig mit der Wandung verbunden werden. Durch die im Wesentlichen monolithische Ausgestaltung kann die Struktur insbesondere unmittelbar und ohne weitere Zwischenelemente mit der Wandung verbunden werden.

Die erfindungsgemäße Struktur weist in ihrer ersten Variante Fäden mit verschiedenen Fadenstärken oder Durchmessern auf, wobei insbesondere die Fäden in einem ersten Bereich einen größeren Durchmesser aufweisen als in einem zweiten Bereich. Dies kann dadurch erreicht werden, dass in einer Matrize zum Formen der Fadenstruktur Ausnehmungen unterschiedlichen Durchmessers vorgesehen sind. Die Struktur kann auf diese Weise Bereiche unterschiedlicher Steifigkeit aufweisen. Beispielsweise kann ein Bereich, der zu Anbindung der Struktur an die Wandung eines Flüssigkeitsbehälters vorgesehen ist, Fäden größeren Durchmessers aufweisen als in einem Bereich, der im fertig montierten Zustand der Wandung abgewandt ist. So kann die Struktur nach Art eines Sandwichmaterials Strukturschichten unterschiedlicher Steifigkeit und/oder Dichte aufweisen.

Alternativ oder ergänzend weist die erfindungsgemäße Struktur in ihrer zweiten bzw. dritten Variante Fäden unterschiedlicher Materialien auf, wobei insbesondere die Fäden in einem ersten Bereich aus einem ersten Material hergestellt sind und die Fäden in einem zweiten Bereich aus einem zweiten Material hergestellt sind. Dies kann dadurch erreicht werden, dass einer Matrize zum Formen der Fäden der Struktur unterschiedliche Materialien zugeführt werden. Beispielsweise kann ein Bereich, der zu Anbindung der Struktur an die Wandung eines Flüssigkeitsbehälters vorgesehen ist, Fäden aus einem ersten Material aufweisen und in einem Bereich, der im fertig montierten Zustand der Wandung abgewandt ist, Fäden aus einem zweiten Material aufweisen. So kann die Struktur nach Art eines Sandwichmaterials Strukturschichten unterschiedlicher Materialien aufweisen.

Nachfolgend wird die Erfindung anhand einer Ausführungsbeispiele darstellenden Zeichnung näher beschrieben. Es zeigen jeweils schematisch:
- Fig. 1A: eine erfindungsgemäße Struktur in einer perspektivischen Ansicht von oben;
- Fig. 1B: eine weitere erfindungsgemäße Struktur in einer perspektivischen Ansicht von oben;
- Fig. 2A: ein Walzen einer Struktur;
- Fig. 2B: ein Heißverstemmen einer Struktur;
- Fig. 3A: einen Ausschnitt einer Wandung eines Flüssigkeitsbehälters mit einer Struktur;
- Fig. 3B: einen weiteren Ausschnitt einer Wandung eines Flüssigkeitsbehälters mit einer Struktur;
- Fig. 4A: eine Vorrichtung zum Herstellen eines Flüssigkeitsbehälters;
- Fig. 4B: einen erfindungsgemäßen Flüssigkeitsbehälter.

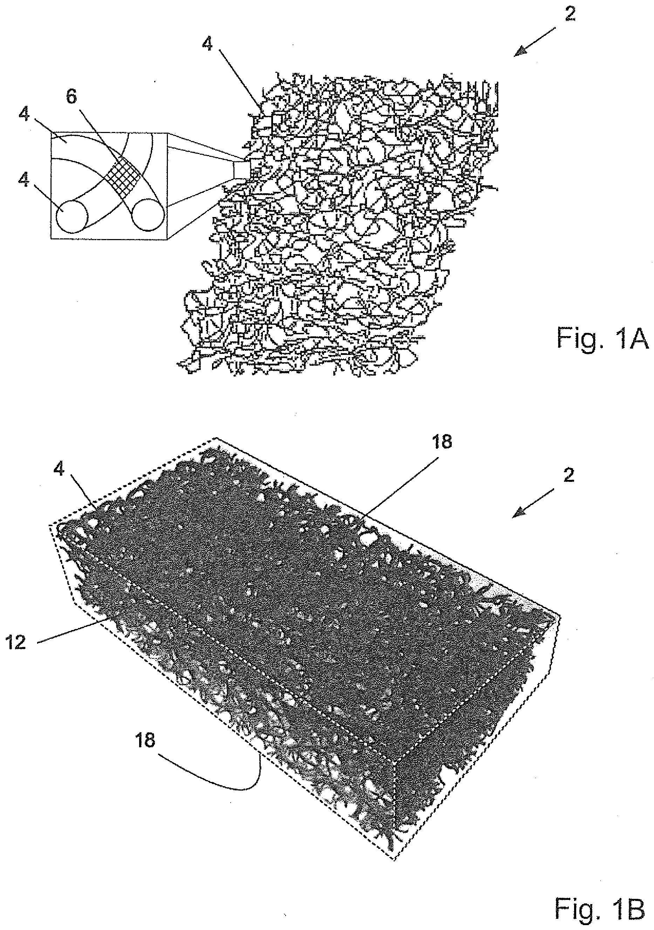

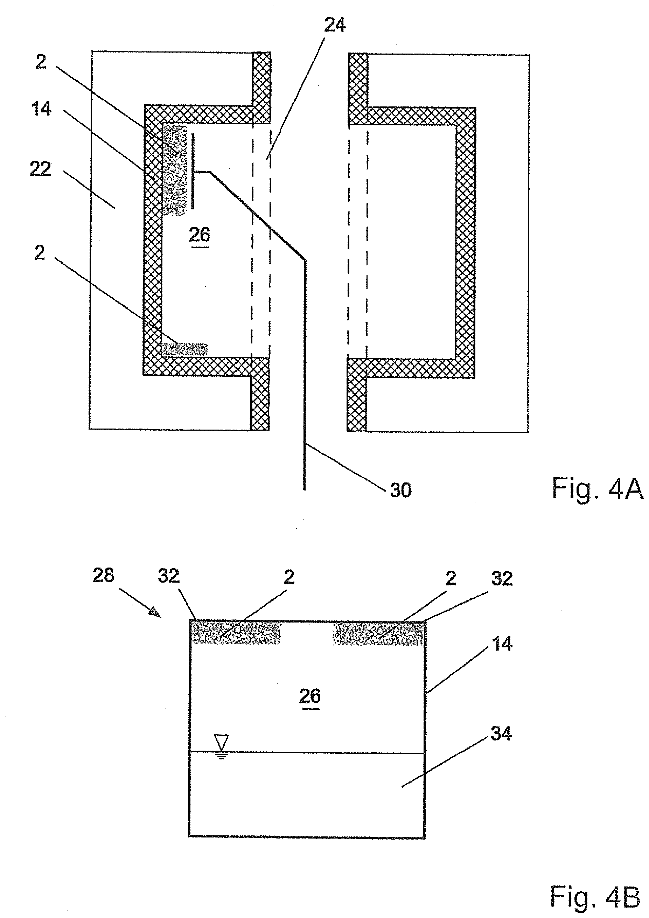

Fig. 1A zeigt eine erfindungsgemäße Struktur 2 zur Verringerung von Schwappgeräuschen, die dazu vorgesehen ist, in einem Flüssigkeitsbehälter 28 (Fig. 4B) für ein Kraftfahrzeug angeordnet zu werden. Die Struktur 2 weist eine regellose Anordnung miteinander vernetzter Fäden 4 auf. Eine Mehrzahl der Fäden 4 der Struktur 2 sind zumindest abschnittsweise stoffschlüssig mit wenigstens einem oder mehreren weiteren Fäden 4 der Struktur 2 derart verbunden, dass eine im Wesentlichen monolithische Struktur 2 gebildet ist.

In der Struktur 2 sind eine Vielzahl regellos angeordneter Verbindungsstellen vorgesehen - vorliegend lokale Verschweißungen sich kreuzender Fäden 4. Die stoffschlüssige Verbindung zwischen den Fäden 4 ist jeweils durch lokale Verschweißungen der Fäden 4 im Bereich ihrer Mantelflächen 6 gebildet, wie in Fig. 1A exemplarisch dargestellt. Die Fäden 4 der Struktur 2 sind aus HDPE hergestellt.

Fig. 1B zeigt eine weitere Ausgestaltung einer erfindungsgemäßen Struktur 2. Im Falle der in Fig. 1B dargestellten Struktur 2 ist jeder der Fäden 4 der Struktur 2 mit wenigstens einem weiteren Faden 4 der Struktur 2 stoffschlüssig verbunden, sodass die Struktur 2 monolithisch gebildet ist. Die Struktur 2 umfasst folglich keine Fäden 4, die zerstörungsfrei aus der Struktur 2 herausgelöst werden könnten.

Wie auch bei der in Fig. 1A dargestellten Struktur 2, weist die in Fig. 1B dargestellte Struktur 2 chaotisch ineinander verwundene und lokal miteinander verschweißte Fäden 4 auf, die ein Fadengitter ausbilden. Die gestrichelten Linien in Fig. 1B deuten das von der Struktur 2 eingenommene, im Wesentlichen quaderförmige Volumen an. Die Struktur 2 weist über ihr gesamtes Volumen verteilt eine Vielzahl regellos angeordneter Verbindungsstellen sich kreuzender Fäden 4 auf, die vorliegend als lokale Verschweißungen der Fäden 4 ausgebildet sind.

Eine Struktur 2, wie in Fig. 1A oder 1B gezeigt, kann als Endlosmaterial in Form von Matten- oder Plattenware bereitgestellt und daraus für die Verwendung in einem Flüssigkeitsbehälter konfektioniert werden.

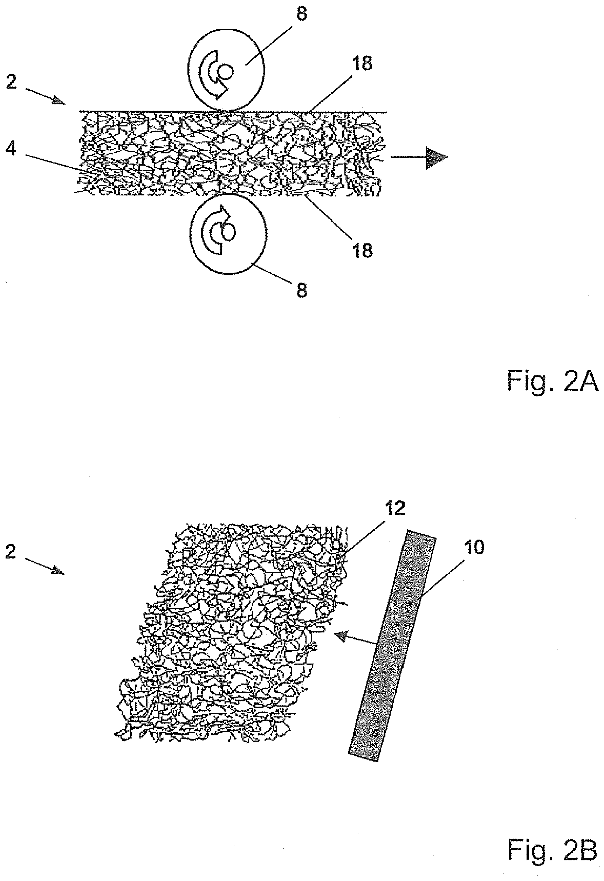

Die Struktur 2 kann durch Walzen 8 verdichtet werden, wie in Fig. 2A dargestellt. Die Pfeile deuten in dieser Darstellung die Bewegungsrichtung der Walzen und der gewalzten Struktur an. Auf diese Weise kann die für den jeweiligen Anwendungsfall geforderte Fadendichte eingestellt werden. Die Struktur 2 wird in einem erwärmten Zustand gewalzt, in dem eine Formgebung ermöglicht wird, ohne die stoffschlüssigen Verbindungen zwischen den Fäden 4 zu zerstören. Die Struktur 2 wird mithilfe der Walzen 8 durch Thermoformen an eine Wandungsform eines Flüssigkeitsbehälters 28 angepasst und/oder in ihren den Walzen zugeordneten Randbereichen lokal verdichtet.

Um die Struktur 2 zu verdichten, zu Formen oder einzelne Fadenenden nach dem Konfektionieren mit der Struktur zu verschweißen, kann eine Vorrichtung 10 zum Heißverstemmen auf Trenn- oder Deckflächen 12 der Struktur 2 mit Druck und Hitze einwirken.

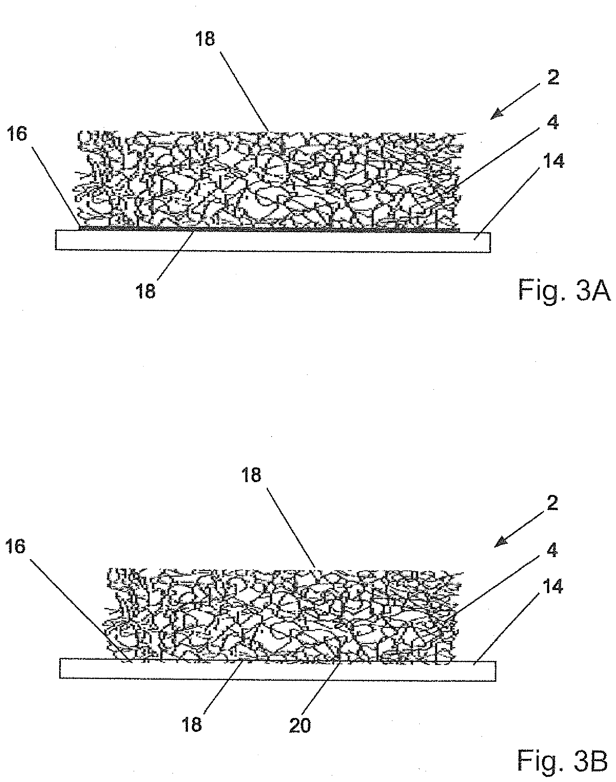

Fig. 3A zeigt einen Ausschnitt einer Wandung 14 eines Flüssigkeitsbehälters 28 (Fig. 4B), die mit einer Struktur 2 in einem Verbindungsbereich 16 verschweißt ist. Die Struktur 2 ist unlösbar stoffschlüssig mit der Wandung 14 verbunden und daher einstückig mit der Wandung 14 gebildet. Die Struktur 2 ist in der formgebenden Wärme der Wandung 14 mit der Wandung 14 verbunden worden. Zwischen der Struktur 2 und der Wandung 14 ist eine im Wesentlichen vollflächigen Verbindung vorgesehen, so dass über den Verbindungsbereich 16 verteilt eine Vielzahl regellos angeordneter Verbindungsstellen zwischen der Struktur 2 und der Wandung 14 gebildet sind. Der Verbindungsbereich 16 kann sich über eine gesamte Deckfläche 18 einer quaderförmigen Struktur 2 aus Fig. 1B erstrecken. Eine solche Deckfläche 18, die den Verbindungsbereich 16 umfassen kann, kann durch Walzen definiert werden (Fig. 2A).

In Fig. 3B ist eine formschlüssige Verbindung zwischen der Wandung 14 und der Struktur 2 dargestellt, die ebenfalls in der formgebenden Wärme der Wandung 14 gebildet worden ist. Fadenenden und Fadenschlaufen 20 der Fäden 4 ragen hierbei in dem Verbindungsbereich 16 in die Wandung 14 und sind von dem Material der Wandung 14 zumindest teilweise umschlossen.

Fig. 4A zeigt ein Blasformwerkzeug 22 zum Herstellen einer Wandung 14 für einen Flüssigkeitsbehälter 28. Zunächst wird ein schlauchförmig extrudierter Vorformling 24 in das zweiteilige Blasformwerkzeug 22 eingebracht. Aus dem Vorformling 24 wird durch Innendruckbeaufschlagung mittels eines Blasdorns (nicht dargestellt) die Wandung 14 geformt. Die Wandung definiert einen Innenraum 26 des Flüssigkeitsbehälters 28 (Fig. 4B).

Mithilfe eines Aktuators 30 wird die Struktur 2 stirnseitig in das Blasformwerkzeug eingeführt und in der formgebenden Wärme der Wandung 14 mit der Wandung 14 verbunden. Dazu wird die Struktur 2 an die Wandung 14 angepresst. Zur flächigen Anlage an der Wandung 14 wird die Struktur 2 dabei teilweise deformiert. Einzelne Strukturelemente 2 können sowohl an vertikalen als auch an horizontalen Wandungsabschnitten befestigt werden.

Fig. 4B zeigt einen Kraftstofftank 28, in den eine Struktur 2 jeweils in Eckbereichen 32 angeordnet ist, um die Geräuschanregung durch Wellenbewegungen der Flüssigkeit 34 zu dämpfen.

### Bezugszeichen

- 2: Struktur
- 4: Fäden
- 6: Mantelflächen
- 8: Walzen
- 10: Vorrichtung zum Heißverstemmen
- 12: Trennflächen
- 14: Wandung
- 16: Verbindungsbereich
- 18: Deckflächen
- 20: Fadenenden / Fadenschlaufen
- 22: Blasformwerkzeug
- 24: Vorformling
- 26: Innenraum
- 28: Kraftstofftank / Flüssigkeitsbehälter
- 30: Aktuator
- 32: Eckbereiche
- 34: Flüssigkeit

## Patentansprüche

1. Verfahren zum Herstellen eines Flüssigkeitsbehälters (28) für ein Kraftfahrzeug, mit den Verfahrensschritten:
- Bereitstellen einer Wandung (14), die dazu vorgesehen ist, einen Innenraum (26) des Flüssigkeitsbehälters (28) zur Aufnahme einer Flüssigkeit (34) zu begrenzen;
- Bereitstellen einer Struktur (2), die dazu vorgesehen ist, zur Verringerung von Schwappgeräuschen in dem Innenraum (26) des Flüssigkeitsbehälters (28) angeordnet zu werden, wobei
- die Struktur (2) eine regellose Anordnung miteinander vernetzter Fäden (4) aufweist und wobei
- eine Mehrzahl der Fäden (4) der Struktur (2) zumindest abschnittsweise stoffschlüssig mit wenigstens einem oder mehreren weiteren Fäden (4) der Struktur (2) derart verbunden sind, dass eine im Wesentlichen monolithische Struktur (2) gebildet ist;
- Verbinden der Struktur (2) mit der Wandung (14)
**dadurch gekennzeichnet, dass** das Verbinden der Struktur (2) mit der Wandung (14) den folgenden Verfahrensschritt aufweist:
- Verschweißen und/oder Verkleben der Struktur (2) mit der Wandung (14), so dass zwischen der Struktur (2) und der Wandung (14) eine stoffschlüssige Verbindung gebildet wird.

2. Verfahren nach Anspruch 1, **dadurch gekennzeichnet, dass** das Verbinden der Struktur (2) mit der Wandung (14) den folgenden Verfahrensschritt aufweist:
- Herstellen einer unlösbaren Verbindung zwischen der Struktur (2) und der Wandung (14), so dass die Wandung (14) und die Struktur (2) einstückig gebildet sind.

3. Verfahren nach einem der voranstehenden Ansprüche, **dadurch gekennzeichnet, dass** die Wandung (14) während des Verbindens mit der Struktur (2) in einem zumindest teilweise plastifizierten Zustand ist.

4. Verfahren nach einem der voranstehenden Ansprüche, **dadurch gekennzeichnet, dass** das Verbinden der Struktur (2) mit der Wandung (14) den folgenden Verfahrensschritt aufweist:
- Anpressen der Struktur (2) an die Wandung (14), so dass zwischen der Struktur (2) und der Wandung (14) eine formschlüssige Verbindung gebildet wird, wobei
- die Wandung (14) während des Verbindens mit der Struktur (2) in einem zumindest teilweise plastifizierten Zustand ist.

5. Verfahren nach einem der voranstehenden Ansprüche, **dadurch gekennzeichnet, dass** das Verbinden der Struktur (2) mit der Wandung (14) einen der folgenden Verfahrensschritte aufweist:
- Herstellen einer im Wesentlichen vollflächigen Verbindung zwischen der Struktur (2) und der Wandung (14), so dass über einen Verbindungsbereich (16) verteilt eine Vielzahl regellos angeordneter Verbindungsstellen zwischen der Struktur (2) und der Wandung (14) gebildet sind; oder
- Herstellen separater oder lokaler Verbindungsbereiche zwischen der Wandung (14) und der Struktur (2).

6. Verfahren nach einem der voranstehenden Ansprüche, **dadurch gekennzeichnet, dass** die Struktur (2) zur Anlage an der Wandung (14) zumindest abschnittsweise deformiert wird.

7. Verfahren nach einem der voranstehenden Ansprüche, **dadurch gekennzeichnet, dass** das Bereitstellen der Wandung (14) die folgenden Verfahrensschritte aufweist:
- Extrudieren eines Vorformlings (24), der dazu vorgesehen ist, durch Blasformen zu einer Wandung (14) des Flüssigkeitsbehälters (28) geformt zu werden;
- Einbringen des Vorformlings (24) in ein Blasformwerkzeug (22) ;
- Formen der Wandung (14) des Flüssigkeitsbehälters durch Druckbeaufschlagung des Vorformlings innerhalb des Blasformwerkzeugs (22);
**und dass** das Verbinden der Struktur (2) mit der Wandung (14) den folgenden Verfahrensschritt aufweist:
- Einführen der Struktur (2) in den Innenraum (26), wobei die Wandung (14) während des Einführens der Struktur (2) innerhalb des Blasformwerkzeugs (22) angeordnet ist.

8. Verfahren nach einem der voranstehenden Ansprüche, **dadurch gekennzeichnet, dass** das Verbinden der Struktur (2) mit der Wandung (14) einen der folgenden Verfahrensschritte aufweist:
- Anordnen der Struktur (2) an einem Aktuator (30), der zum Einführen der Struktur (2) in den Innenraum (26) und zum Anpressen der Struktur (2) an die Wandung (14) vorgesehen ist; und/oder
- Anordnen der Struktur (2) an einem Fügerahmen, der insbesondere dazu vorgesehen ist, zwischen Halbschalen der Wandung (14) des Flüssigkeitsbehälters (28) angeordnet zu werden.

9. Verfahren nach einem der voranstehenden Ansprüche, **dadurch gekennzeichnet, dass** das Bereitstellen der Struktur (2) wenigstens einen der folgenden Verfahrensschritte aufweist:
- Bereitstellen eines mattenartigen Halbzeugs;
- Konfektionieren der Struktur (2) aus dem mattenartigen Halbzeug entlang wenigstens einer Trennebene (12);
- Nachbearbeiten der Struktur (2) im Bereich der Trennebene (12) und/oder im Bereich von Deckflächen (18), insbesondere durch Heißverstemmen, Walzen, Verdichten, oder Verschweißen.

10. Verfahren nach einem der voranstehenden Ansprüche, **dadurch gekennzeichnet, dass** das Bereitstellen der Wandung (14) einen der folgenden Verfahrensschritte aufweist:
- Spritzgießen der Wandung (14), wobei die Wandung (14) insbesondere Befestigungsmittel zur lösbaren Befestigung der Struktur (2) an der Wandung (14) aufweist; oder
- Extrudieren von wenigstens zwei mattenartigen Vorformlingen, die dazu vorgesehen sind, zu der Wandung (14) verbunden zu werden.

11. Flüssigkeitsbehälter für ein Kraftfahrzeug, mit
- einer Wandung (14), die einen Innenraum (26) zur Aufnahme von Flüssigkeit (34) begrenzt, und
- einer Struktur (2), die zur Verringerung von Schwappgeräuschen in dem Innenraum (26) angeordnet ist, wobei
- die Struktur (2) eine regellose Anordnung miteinander vernetzter Fäden (4) aufweist, wobei
- eine Mehrzahl der Fäden (4) der Struktur (2) zumindest abschnittsweise stoffschlüssig mit wenigstens einem oder mehreren weiteren Fäden (4) der Struktur (2) derart verbunden sind, dass eine im Wesentlichen monolithische Struktur (2) gebildet ist
**dadurch gekennzeichnet, dass**
- die Struktur (2) mit der Wandung (14) verschweißt und/oder verklebt ist.

12. Flüssigkeitsbehälter nach Anspruch 11, **dadurch gekennzeichnet, dass** die Struktur (2) mit der Wandung (14) formschlüssig verbunden ist.

13. Struktur (2) zur Verringerung von Schwappgeräuschen, die dazu vorgesehen ist, in einem Flüssigkeitsbehälter (28) für ein Kraftfahrzeug angeordnet zu werden, wobei
- die Struktur (2) eine regellose Anordnung miteinander vernetzter Fäden (4) aufweist, wobei
- eine Mehrzahl der Fäden (4) der Struktur (2) zumindest abschnittsweise stoffschlüssig mit wenigstens einem oder mehreren weiteren Fäden (4) der Struktur (2) derart verbunden sind, dass eine im Wesentlichen monolithische Struktur (2) gebildet ist
**dadurch gekennzeichnet, dass**
- die Struktur (2) Fäden (4) mit verschiedenen Fadenstärken oder Durchmessern aufweist,
und/oder
- die Struktur (2) Fäden (4) unterschiedlicher Materialien aufweist.

14. Struktur (2) nach Anspruch 13, **dadurch gekennzeichnet, dass** eine Vielzahl regellos angeordneter Verbindungsstellen innerhalb der Struktur (2) vorgesehen ist, insbesondere lokale Verschweißungen sich kreuzender Fäden (4).

15. Struktur nach einem der Ansprüche 13 bis 14, **dadurch gekennzeichnet, dass** die Fäden (4) in einem ersten Bereich einen größeren Durchmesser aufweisen als in einem zweiten Bereich.

16. Struktur nach einem der Ansprüche 13 bis 15, **dadurch gekennzeichnet, dass** die Fäden (4) in einem ersten Bereich aus einem ersten Material hergestellt sind und die Fäden in einem zweiten Bereich aus einem zweiten Material hergestellt sind.

## Claims

1. A method for producing a liquid container (28) for a motor vehicle, with the method steps:
- providing a wall (14) which is intended to delimit an interior (26) of the liquid container (28) for receiving a liquid (34) ;
- providing a structure (2) which is intended to be arranged in the interior (26) of the liquid container (28) in order to reduce sloshing sounds, wherein
- the structure (2) comprises a random arrangement of interlinked threads (4), and wherein
- a multiplicity of the threads (4) of the structure (2) are connected at least in portions by substance bonding to at least one or more further threads (4) of the structure (2) such that a substantially monolithic structure (2) is formed;
- connecting the structure (2) to the wall (14),
**characterized in that** the step of connecting the structure (2) to the wall (14) comprises the following method step:
- welding and/or gluing the structure (2) to the wall (14) so that a substance-bonded connection is formed between the structure (2) and the wall (14).

2. The method as claimed in claim 1, **characterized in that** the step of connecting the structure (2) to the wall (14) comprises the following method step:
- producing an inseparable connection between the structure (2) and the wall (14) so that the wall (14) and the structure (2) are formed integrally.

3. The method as claimed in any of the preceding claims, **characterized in that** during connection to the structure (2), the wall (14) is in an at least partially plasticized state.

4. The method as claimed in any of the preceding claims, **characterized in that** the step of connecting the structure (2) to the wall (14) comprises the following method step:
- pressing the structure (2) against the wall (14) so that a form-fit connection is formed between the structure (2) and the wall (14), wherein
- during connection to the structure (2), the wall (14) is in an at least partially plasticized state.

5. The method as claimed in any of the preceding claims, **characterized in that** the step of connecting the structure (2) to the wall (14) comprises one of the following method steps:
- producing a substantially full-surface connection between structure (2) and the wall (14), so that a plurality of randomly arranged connecting points are formed between the structure (2) and the wall (14) and distributed over a connecting region (16); or
- producing separate or local connecting regions between the wall (14) and the structure (2).

6. The method as claimed in any of the preceding claims, **characterized in that** the structure (2) is deformed at least in portions for bearing against the wall (14).

7. The method as claimed in any of the preceding claims, **characterized in that** the step of providing the wall (14) comprises the following method steps:
- extrusion of a preform (24) which is intended to be formed into a wall (14) of the liquid container (28) by blow molding;
- introduction of the preform (24) into a blow-molding tool (22) ;
- forming of the wall (14) of the liquid container by pressurization of the preform inside the blow-molding tool (22); and that the step of connecting the structure (2) to the wall (14) comprises the following method step:
- introduction of the structure (2) into the interior (26), wherein the wall (14) is arranged inside the blow-molding tool (22) during insertion of the structure (2).

8. The method as claimed in any of the preceding claims, **characterized in that** the step of connecting the structure (2) to the wall (14) comprises one of the following method steps:
- arranging the structure (2) on an actuator (30) which is intended for inserting the structure (2) into the interior (26) and pressing the structure (2) against the wall (14);
and/or
- arranging the structure (2) on a joining frame which is intended in particular to be arranged between half shells of the wall (14) of the liquid container (28).

9. The method as claimed in any of the preceding claims, **characterized in that** the step of providing the structure (2) comprises at least one of the following method steps:
- providing a mat-like semifinished product;
- making the structure (2) from the mat-like semifinished product along at least one separating plane (12);
- finishing the structure (2) in the region of the separating plane (12) and/or in the region of covering surfaces (18), in particular by hot caulking, rolling, sealing or welding.

10. The method as claimed in any of the preceding claims, **characterized in that** the step of providing the wall (14) comprises one of the following method steps:
- injection molding of the wall (14), wherein the wall (14) comprises in particular fixing means for releasable fixing of the structure (2) to the wall (14); or
- extrusion of at least two mat-like preforms which are intended to be connected to the wall (14).

11. A liquid container for a motor vehicle, with
- a wall (14) which delimits an interior (26) for receiving liquid (34), and
- a structure (2) which is arranged in the interior (26) in order to reduce sloshing sounds,
wherein
- the structure (2) comprises a random arrangement of interlinked threads (4), wherein
- a multiplicity of the threads (4) of the structure (2) are connected at least in portions by substance bonding to at least one or more further threads (4) of the structure (2), such that a substantially monolithic structure (2) is formed **characterized in that**
- the structure (2) is welded and/or glued to the wall (14).

12. The liquid container as claimed in claim 11, **characterized in that** the structure (2) is connected by form fit to the wall (14) .

13. A structure (2) for reducing sloshing sounds, which is intended to be arranged in a liquid container (28) for a motor vehicle, wherein
- the structure (2) comprises a random arrangement of interlinked threads (4), wherein
- a multiplicity of the threads (4) of the structure (2) are connected at least in portions by substance bonding to at least one or more further threads (4) of the structure (2), such that a substantially monolithic structure (2) is formed **characterized in that**
- the structure (2) has threads (4) of different thread thickness or diameter,
and/or
- the structure (2) has threads (4) of different materials.

14. The structure (2) as claimed in claim 13, **characterized in that** a plurality of randomly arranged connecting points is provided inside the structure (2), in particular local welds of crossing threads (4).

15. The structure as claimed in one of claims 13 or 14, **characterized in that** the threads (4) in a first region have a greater diameter than in a second region.

16. The structure as claimed in any of claims 13 to 15, **characterized in that** the threads (4) in a first region are made from a first material, and the threads in the second region are made from a second material.

## Revendications

1. Procédé de fabrication d'un réservoir à liquide (28) pour un véhicule automobile, comprenant les étapes consistant à :
- fournir une paroi (14) qui est destinée à délimiter un espace intérieur (26) du réservoir à liquide (28) pour recevoir un liquide (34) ;
- fournir une structure (2) qui est destinée à être disposée dans l'espace intérieur (26) du réservoir à liquide (28) pour réduire les bruits d'éclaboussement, la structure (2) comprenant un agencement aléatoire de fils (4) réticulés les uns avec les autres, et
- une pluralité des fils (4) de la structure (2) étant reliés au moins dans certaines régions par liaison de matière à au moins un ou plusieurs autres fils (4) de la structure (2) de telle sorte qu'une structure (2) sensiblement monolithique soit formée ;
- relier la structure (2) à la paroi (14), **caractérisé en ce que** la liaison de la structure (2) à la paroi (14) comprend l'étape suivante, consistant à :
- souder et/ou à coller la structure (2) à la paroi (14) de telle sorte qu'une liaison de matière soit formée entre la structure (2) et la paroi (14).

2. Procédé selon la revendication 1, **caractérisé en ce que** la liaison de la structure (2) à la paroi (14) comprend l'étape suivante, consistant à :
- établir une liaison inamovible entre la structure (2) et la paroi (14) de telle sorte que la paroi (14) et la structure (2) soient formées d'une seule pièce.

3. Procédé selon l'une des revendications précédentes, **caractérisé en ce que** la paroi (14) est dans un état au moins partiellement plastifié pendant la liaison à la structure (2).

4. Procédé selon l'une des revendications précédentes, **caractérisé en ce que** la liaison de la structure (2) à la paroi (14) comprend l'étape suivante, consistant à :
- presser la structure (2) contre la paroi (14) de telle sorte qu'une liaison de forme soit formée entre la structure (2) et la paroi (14),
- la paroi (14) étant dans un état au moins partiellement plastifié pendant la liaison à la structure (2).

5. Procédé selon l'une des revendications précédentes, **caractérisé en ce que** la liaison de la structure (2) à la paroi (14) comprend l'une des étapes suivantes, consistant à :
- établir une liaison sensiblement sur toute la surface entre la structure (2) et la paroi (14) de telle sorte qu'une pluralité de points de liaison disposés aléatoirement et repartis sur une zone de liaison (16) soient formés entre la structure (2) et la paroi (14) ; ou à
- former des zones de liaison séparées ou locales entre la paroi (14) et la structure (2).

6. Procédé selon l'une des revendications précédentes, **caractérisé en ce que** la structure (2) est déformée au moins dans certaines régions pour le contact avec la paroi (14).

7. Procédé selon l'une des revendications précédentes, **caractérisé en ce que** la fourniture de la paroi (14) comprend les étapes suivantes, consistant à :
- extruder une préforme (24) destinée à être formée dans une paroi (14) d'un réservoir à liquide (28) par moulage par soufflage ;
- insérer la préforme (24) dans un moule de soufflage (22) ;
- mouler la paroi (14) du réservoir à liquide par la mise sous pression de la préforme à l'intérieur du moule de soufflage (22) ; **et en ce que** la liaison de la structure (2) à la paroi (14) comprend l'étape suivante, consistant à :
- insérer la structure (2) dans l'espace intérieur (26), la paroi (14) étant disposée à l'intérieur du moule de soufflage (22) pendant l'insertion de la structure (2).

8. Procédé selon l'une des revendications précédentes, **caractérisé en ce que** la liaison de la structure (2) à la paroi (14) comprend l'une des étapes suivantes, consistant à :
- disposer la structure (2) au niveau d'un actionneur (30) qui est prévu pour l'insertion de la structure (2) dans l'espace intérieur (26) et pour presser la structure (2) contre la paroi (14) ; et/ou à
- disposer la structure (2) au niveau d'un cadre de jonction destiné en particulier à être disposé entre des demi-coques de la paroi (14) du réservoir à liquide (28).

9. Procédé selon l'une des revendications précédentes, **caractérisé en ce que** la fourniture de la structure (2) comprend au moins l'une des étapes suivantes, consistant à :
- fournir un produit semi-fini en forme de natte ;
- réaliser la structure (2) à partir du produit semi-fini en forme de natte le long d'au moins un plan de séparation (12) ;
- retraiter la structure (2) dans la zone du plan de séparation (12) et/ou dans la zone des surfaces de recouvrement (18), en particulier par matage à chaud, laminage, compactage ou soudage.

10. Procédé selon l'une des revendications précédentes, **caractérisé en ce que** la fourniture de la paroi (14) comprend l'une des étapes suivantes, consistant à :
- mouler par injection la paroi (14), la paroi (14) comportant en particulier des moyens de fixation permettant de fixer de manière amovible la structure (2) à la paroi (14) ; ou à
- extruder au moins deux préformes en forme de natte prévues pour être reliées à la paroi (14).

11. Réservoir à liquide pour véhicule automobile, comportant
- une paroi (14) délimitant un espace intérieur (26) pour recevoir du liquide (34), et
- une structure (2) disposée dans l'espace intérieur (26) pour réduire les bruits d'éclaboussement,
- la structure (2) comprenant une disposition aléatoire de fils (4) réticulés,
- une pluralité des fils (4) de la structure (2) étant reliés au moins dans certaines régions par liaison de matière à au moins un ou plusieurs autres fils (4) de la structure (2) de telle sorte qu'une structure (2) sensiblement monolithique soit formée, **caractérisé en ce que**
- la structure (2) est soudée et/ou collée à la paroi (14).

12. Réservoir à liquide selon la revendication 11, **caractérisé en ce que** la structure (2) est reliée par liaison de forme à la paroi (14).

13. Structure (2) permettant de réduire des bruits d'éclaboussement, prévue pour être disposée dans un réservoir à liquide (28) pour véhicule automobile,
- la structure (2) comprenant une disposition aléatoire de fils (4) réticulés,
- une pluralité des fils (4) de la structure (2) étant reliés au moins dans certaines régions par liaison de matière à au moins un ou plusieurs autres fils (4) de la structure (2) de telle sorte qu'une structure (2) sensiblement monolithique soit formée, **caractérisé en ce que**
- la structure (2) comporte des fils (4) de différentes épaisseurs ou de différents diamètres, et/ou
- la structure (2) comporte des fils (4) en matériaux différents.

14. Structure (2) selon la revendication 13, **caractérisée en ce qu'**une pluralité de points de liaison disposés de manière aléatoire sont prévus à l'intérieur de la structure (2), en particulier des soudures locales de fils croisés (4).

15. Structure selon l'une des revendications 13 à 14, **caractérisée en ce que** les fils (4) ont un diamètre plus important dans une première zone que dans une seconde zone.

16. Structure selon l'une des revendications 13 à 15, **caractérisée en ce que** les fils (4) sont réalisés en un premier matériau dans une première zone et **en ce que** les fils sont réalisés en un second matériau dans une seconde zone.
